# EUROPEAN PATENT APPLICATION

(11) **EP 2 730 162 A1**
(43) Date of publication of application: **14.05.2014**
(21) Application number: 12821094.5
(22) Date of filing: 12.09.2012
(51) Int. Cl.: A01K 1/015

(54) **EXCREMENT TREATING MATERIAL, MANUFACTURING METHOD FOR EXCREMENT TREATING MATERIAL AND MANUFACTURING DEVICE THEREFOR**

(71) Applicant: Tokai Paper Converting Co., Ltd., Shizuoka 427-8505 (JP); NISSHO IWAI PAPER & PULP CORP., Minato-ku Tokyo 1070052 (JP); SJ CORPORATION (HK) LIMITED, Hong Kong (HK)
(72) Inventor: OKAMOTO, Susumu, Shimada-shi, Shizuoka 4278505 (JP); TAKAHASHI, Takashi, Shimada-shi, Shizuoka 4278505 (JP); HORIHATA, Yoshizaku, Shimada-shi, Shizuoka 4278505 (JP); NARITA, Koichi, Shimada-shi, Shizuoka 4278505 (JP); TAKASE, Akio, Shimada-shi, Shizuoka 4278505 (JP); MATSUO, Shinichi, Minato-ku, Tokyo 1070052 (JP); SHIMIZU,Toru, Minato-ku, Tokyo 1070052 (JP); TAKAYANAGI, Hiroaki, Minato-ku, Tokyo 1070052 (JP); SEO, Hyunjn, Kowloom, Hong kong (HK); SUGIYAMA, Akihiro, Kowloom, Hong kong (HK); MURAKAWI, Takashi, Kowloom, Hong kong (HK)
(74) Representative: Hirsch & Associés
(86) International application number: PCT/JP2012/073325
(87) International publication number: WO 2014/041633

(57) **Abstract**

[Technical Problem]

In a body waste treating material, a method for manufacturing the body waste treating material, and an apparatus for manufacturing the same, a technical problem is in manufacturing the body waste treating material without a water absorbing agent as a material for complementing a water absorptive property and a water retention property and a wasting step in manufacturing easily at a low cost.

[Solution to Problem]

The body waste treating material is formed to a certain shape by the steps of: defiberizing used paper as a pulpable raw material to generate a dissolved material, deinking the dissolved material generated in the defiberizing step, dehydrating the dissolved material deinked in the deinking step to generate a fibrous material, classifying the fibrous material generated in the dehydrating step into a non-defective fibrous material suitable for forming paper and a defective fibrous material unsuitable for forming paper and molding the non-defective fibrous material suitable for forming paper classified in the classifying step.

## Description

### Technical Field

The present invention relates to a body waste treating material, a method for manufacturing the body waste treating material, and an apparatus for manufacturing the body waste treating material. More particularly, the present invention relates to a body waste treating material, a method for manufacturing the body waste treating material, and an apparatus for manufacturing the body waste treating material, in which the body waste material treating material is manufactured from a non-defective fibrous material suitable for forming paper by using a pulpable raw material.

### Background Art

As for a body waste treating material used for treating a body waste of pets such as a cat and a dog bred in a housing or a body waste in a simple toilet upon disasters, sand is conventionally used. In recent years, however, a body waste treating material in which paper powder or wood flour, tea grounds, coffee grounds after exhaustion, water absorptive polymer, and the like has been proposed.

For example, Japanese Patent Application Laid-Open No. 10-178951 discloses a body waste treating material for pets with a structure in which corrugated paper is minced into plate paper strips and surfaces of the minced plate paper strips are covered by starch or absorptive agent such as water absorptive polymer.

### Citation List

### Patent Literature

[PTL 1] Japanese Patent Application Laid-Open No. 10-178951

### Summary of Invention

### Technical Problem

The body waste treating material as disclosed in above patent literature 1, however, has a problem in that it needs water absorbing agent as a material for complementing a water absorptive property and a water retention property of corrugated material paper so that when a water absorptive polymer is used as the water absorbing agent, the material cannot be flown to drainage to be discarded, and thus needs to be incinerated or degraded. Accordingly, it causes greater loads on an environment and a problem severe to the environment. Further, the body waste treating material as disclosed in above patent literature 1 uses the corrugated material paper shaped as a plate, which paper is minced to be used, causing a problem in that it needs an unnecessary step in manufacturing process. Further, since the corrugated material paper is a perfect material aimed at being used for a packaging material or the like, there is a problem in that the use thereof as a raw material for the body waste treating material may lead to wasting of resources.

Accordingly, an object of the present invention is to provide a body waste treating material, a method for manufacturing the body waste treating material, and an apparatus for manufacturing the body waste treating material, which can be manufactured from a non-defective fibrous material suitable for forming paper using a pulpable raw material without water absorbing agent as a material for complementing water absorptive property and a water retention property and a useless step in manufacturing easily at a low cost, and efficiently use resources, and be well dissolved and flown into drainage to be easily discarded, and be environment-friendly with a high water absorptive property, and reduce weight.

### Solution to Problem

According to an aspect of the present invention, a fibrous material is obtained by defiberizing and dehydrating a pulpable raw material in which a non-defective fibrous material suitable for forming paper is molded to form a body waste treating material with a certain shape.

### Advantageous Effects of Invention

A body waste treating material according to the present invention can be manufactured from a non-defective fibrous material suitable for forming paper using a pulpable raw material without water absorbing agent as a material for complementing water absorptive property and a water retention property and a useless step so as to be manufactured easily at a low cost, so that resources can be efficiently used. Further, the body waste treating material can be well dissolved, flown into drainage to be easily discarded, be environment-friendly with a high water absorptive property, and be lightened.

### Brief Description of Drawings

[Fig. 1] Fig. 1 is a flowchart showing a method for manufacturing a body waste treating material (embodiment).
[Fig. 2] Fig. 2 is a configuration diagram showing an apparatus for manufacturing a body waste treating material (embodiment).
[Fig. 3] Fig. 3 is a lateral view showing a body waste treating material shaped as a short column (embodiment).
[Fig. 4] Fig. 4 is a lateral view showing a curved body waste treating material shaped as a short column (embodiment).
[Fig. 5] Fig. 5 is a lateral view showing a spherically shaped body waste treating material (embodiment).
[Fig. 6] Fig. 6 is a lateral view showing a body waste treating material with a spherical surface in which a recess is formed (embodiment).
[Fig. 7] Fig. 7 is a lateral view showing a body waste treating material with a spherical surface on which a protrusion is formed (embodiment).
[Fig. 8] Fig. 8 is a lateral view showing a body waste treating material shaped as a spindle (embodiment).
[Fig. 9] Fig. 9 is a lateral view showing a spherically shaped body waste treating material in which a hollow is formed (embodiment).
[Fig. 10] Fig. 10(A) is a plan view showing a body waste treating material having three legs. Fig. 10(B) is a lateral view showing a body waste treating material having three legs (embodiment).
[Fig. 11] Fig. 11 is a lateral view showing a dual-structured body waste treating material (embodiment).
[Fig. 12] Fig. 12 is a lateral view showing a body waste treating material having four legs (embodiment).
[Fig. 13] Fig. 13(A) is lateral view showing a preformed fibrous material. Fig. 13(B) is a lateral view showing a body waste treating material expanded to be spherically formed with a certain size (embodiment).
[Fig. 14] Fig. 14 is a flowchart showing a molding step of the body waste treating material in Fig. 13 (embodiment).
[Fig. 15] Fig. 15(A) is cross sectional view showing a preformed fibrous material. Fig. 15(B) is a cross sectional view showing a body waste treating material with a surface on which surface fiber is attached (embodiment).
[Fig. 16] Fig. 16 is a flowchart showing a molding step of the body waste treating material in Fig. 15 (embodiment).
[Fig. 17] Fig. 17 is a cross sectional view showing a body waste treating material with a hardened surface in Fig. 15(B).

### Description of Embodiments

In the present invention, in a body waste treating material, an object of providing the body waste treating material that can be manufactured from a non-defective fibrous material suitable for forming paper using a pulpable raw material without water absorbing agent as a material for complementing water absorptive property and a water retention property and a useless step in manufacturing easily at a low cost, and efficiently use resources, and be well dissolved and flown into drainage to be easily discarded, and be environment-friendly with a high water absorptive property, and reduce weight is achieved by using the pulpable raw material, namely the non-defective fibrous material suitable for forming paper.

### [Embodiment]

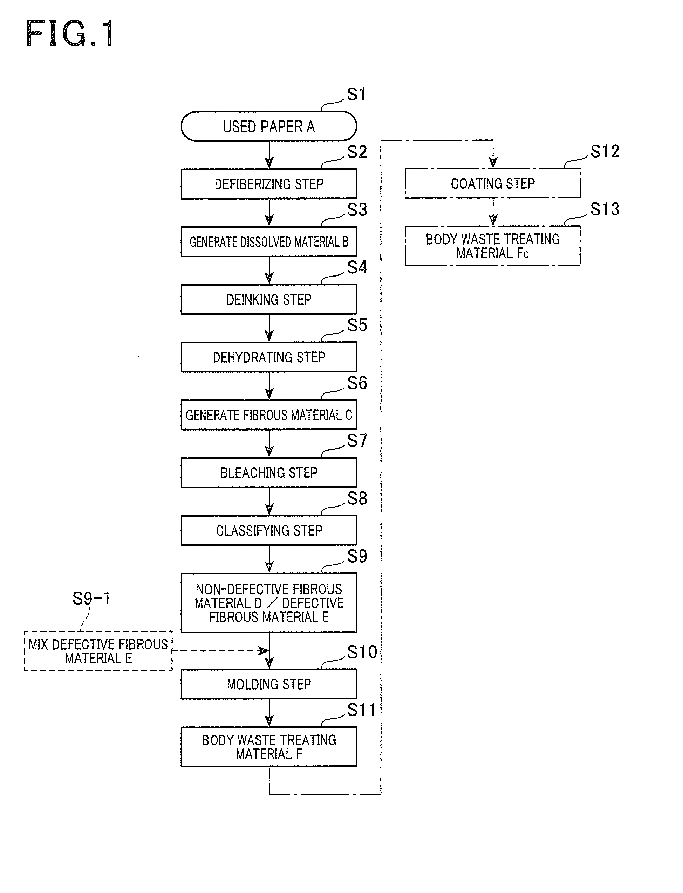

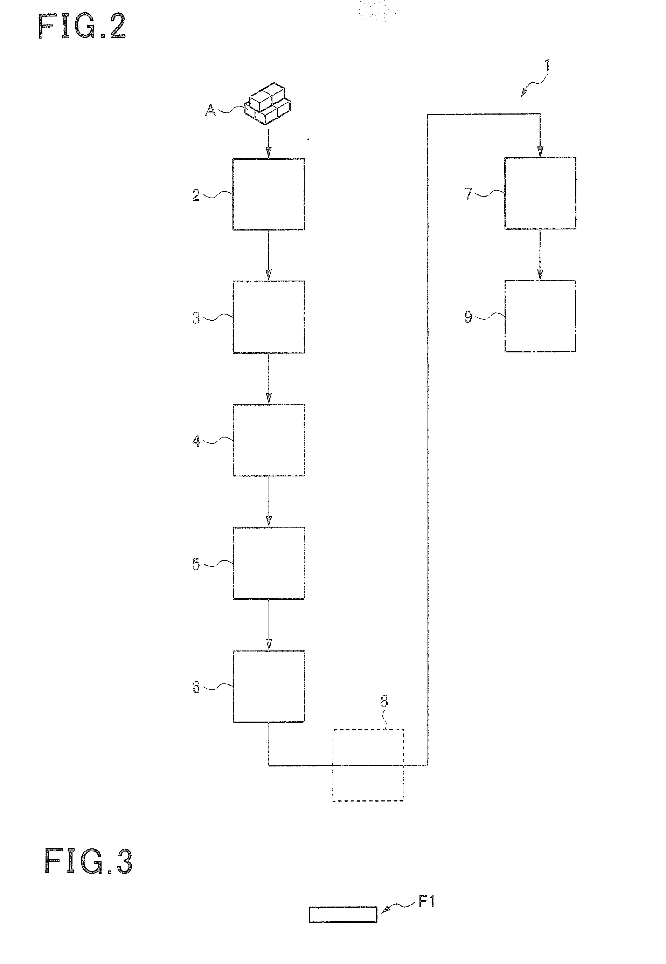

Figs. 1-17 show embodiments of the present invention. As shown in Fig. 2, an apparatus 1 for manufacturing a body waste treating material F includes a disintegrator 2, a deinking machine 3, a dehydrator 4, a bleaching machine 5, a classifying machine 6, and a molding machine 7, in which the body waste treating material F is manufactured using a pulpable raw material. In the present embodiment, used paper A is used as the pulpable raw material.

As for the pulpable raw material, pulp itself can be used without using the used paper.

The disintegrator 2 includes agitating blades, adds, for example, water to used paper A as the pulpable raw material, and disintegrates the used paper A to generate a dissolved material B.

The deinking machine 3 deinks the dissolved material B generated by the disintegrator 2. The dehydrator 4 dehydrates the dissolved material B deinked by the deinking machine 3 to generate a fibrous material C. The bleaching machine 5 bleaches the fibrous material C generated by the dehydrator 4. The classifying machine 6 classifies the fibrous material C (also referred to as "pulp") bleached by the bleaching machine 5 into a non-defective fibrous material D (also referred to as "wet" or "pulpa") suitable for forming paper and a defective fibrous material E (also referred to as "sludge") unsuitable for forming paper.

The molding machine 7 molds the non-defective fibrous material D suitable for forming paper classified by the classifying machine 6 to form the body waste treating material F with a certain shape.

In the defiberizing step of the used paper A, the fibrous material C containing therein fibers having a variety of thicknesses and lengths is generated. In forming paper, since the fibers are entwined and thinly molded, fibers with a thick and/or a long property are suitable. As for short fibers with a thin and/or a short property, however, since they are hard to be entwined and unsuitable for forming paper, they are usually discarded. Accordingly, the fibrous material C includes the non-defective fibrous material D formed by the fibers with a thick and/or a long property suitable for forming paper and a defective fibrous material E formed by the fibers with a thin and/or a short property unsuitable for forming paper.

Accordingly, the classifying machine 6 classifies the fibrous material C containing therein fibers with different properties into the non-defective fibrous material D suitable for forming paper and the non-defective fibrous material E unsuitable for forming paper using a filter.

In the classifying step according to the present embodiment, for example, a filter with a slit having a width (size) of 0.15 mm is used to classify the fibrous material C into the non-defective fibrous material D with a fiber diameter greater than 0.15 mm, which remains on the filter and the defective fibrous material E with a fiber diameter smaller than 0.15mm, which passes through the filter.

This numeral value tends to be adopted relatively frequently.

Accordingly, the numeral value of the fiber diameter in the present embodiment is merely an example and does not limit a scope of the numeral values.

Next, a method for manufacturing the body waste treating material F is described.

As shown in Fig. 1, upon manufacturing the body waste treating material F, first, the used paper A as a pulpable raw material is prepared, and the body waste treating material F is manufactured according to the steps of defiberizing, deinking, dehydrating, bleaching, classifying, and molding.

As for the pulpable raw material, pulp itself can be also prepared.

Upon manufacturing the body waste treating material F, first, in the preparing step (step S1), the used paper A as a material is prepared and a foreign material is removed from the used paper A.

In the defiberizing step (step S2), water and necessary agents (such as sodium hydroxide, hydrogen peroxide, sodium silicate) are added to the used paper A to be fed into the disintegrator 2 and agitated according to rotation force of the agitating blades rotating at a high speed to mix the water with the used paper A and disintegrate the used paper A so as to generate dissolved material B (step S3).

In the present embodiment, in principle, refining beating used for forming paper is not performed. Accordingly, the fibers are not compressed in vain so that the fibers are maintained as flexible. Namely, the fibers themselves are not compressed, and the fibers tangled with each other are not compressed as well. Accordingly, upon forming the body waste treating material F, porosity in an inside thereof can be increased and a water absorptive property can be improved.

In this step S3, the refining beating may be performed on the disintegrated fibers according to the needs.

In the deinking step (step S4), the dissolved material B generated in the defiberizing step (step S2) is deinked using air bubbles in the deinking machine 3. In this case, deinking agent (chemical agent) is added into the deinking machine 3 to swell the dissolved material B so as to allow an ink to be dissolved from and be come off the fibers.

In the dehydrating step (step S5), the dissolved material B deinked in the deinking step (step S4) is dehydrated by the dehydrator 4 to generate the fibrous material C (step S6). In this dehydrating step (step S5), most of moisture in the fibrous material C is removed, but a certain amount of moisture is contained in the fibrous material C.

In the bleaching step (step S7), bleach (such as sodium hypochlorite, chlorine dioxide, and hydrogen peroxide) is added to the fibrous material C generated in the dehydrating step (step S5) to be fed into the bleaching machine 5 to be bleached. According to the bleach, the fibrous material C is decolorized to be substantially white as a whole.

In the classifying step (step S8), the fibrous material C bleached in the bleaching step (step S7) is classified into the non-defective fibrous material D suitable for forming paper and defective fibrous material E unsuitable for forming paper by the classifying machine 6 (step S9).

Upon this, in the classifying step, a filter with a slit having a width (size) of 0.15 mm, for example is used to classify the fibrous material C into the non-defective fibrous material D with a fiber diameter greater than 0.15 mm, which remains on the filter and the defective fibrous material E with a fiber diameter smaller than 0.15 mm, which passes through the filter.

This numeral value tends to be adopted relatively frequently.

Accordingly, the numeral value of the fiber diameter in the present embodiment is merely an example and does not limit a scope of the numeral values.

The non-defective fibrous material D suitable for forming paper classified by the classifying machine 6 is whiter than the defective fibrous material E unsuitable for forming paper, with less smell and can be obtained at an amount greater than that of the defective fibrous material E unsuitable for forming paper.

Then, in the molding step (step S10), the non-defective fibrous material D classified in the classifying step (step S8) is molded by the molding machine 7 to form a dry body waste treating material F with a certain shape.

In this molding step (step S10), the non-defective fibrous material D suitable for forming paper is, for example, packed into the mold to form the body waste treating material F with a certain shape, or the non-defective fibrous material D is processed by being extruded through a mold cavity by an extruding mechanism to form the body waste treating material F with a certain shape.

According to the present embodiment, this body waste treating material F is formed to have a diameter of about 5 mm and a length of about 5-10 mm. The size of the body waste treating material F is, however, not limited to the above size.

By forming this molded body waste treating material F to have a diameter of about 5 mm and a length of about 5-10 mm, for example, the body waste treating material F may have a high internal porosity, a high water absorptive property, and a high resolvability upon absorbing water from a body waste. Thus, the body waste treating material F is easily dissolved by the body waste so as to be easily aggregated by being adhered to each other.

Further, since this body waste treating material includes a high internal porosity, weight per unit is small, namely it includes a light property. Accordingly, it can be easily conveyed.

Moreover, this body waste treating material F is used by being put into a container configuring a toilet for a pet or a simple toilet upon disasters, for example. In this case, since the body waste treating material F is of light weight, it is easy to convey the toilet.

Also, in the body waste treating material F used and aggregated by absorbing water, since the fibers are easily disintegrated with a high resolvability, the body waste treating material F does not clog piping and flows smoothly. Accordingly, the body waste treating material can be flown into drainage to be discarded without an incinerating process or a dissolving process, for example. Therefore, loads on an environment can be reduced, and thus the body waste treating material is environment-friendly.

In the present embodiment, in the process of manufacturing the body waste treating material F, the steps of defiberizing, deinking, dehydrating, bleaching, and molding are performed in this order, but these steps can be interchanged to be reordered.

Further, in the process of manufacturing the body waste treating material F, it is possible to perform the step of agitating the fibers or pulverizing the fibers.

As shown in Figs. 3-17, in the molding step, the body waste treating material F with a shape including a variety of types of properties can be formed.

As shown in Fig. 3, for example, in the molding step, a body waste treating material F1 with a short bar columnar shape can be formed.

Since the shape of the body waste treating material F1 with this short bar columnar shape is simple, manufacture thereof is easy and it can be manufactured easily at a low cost.

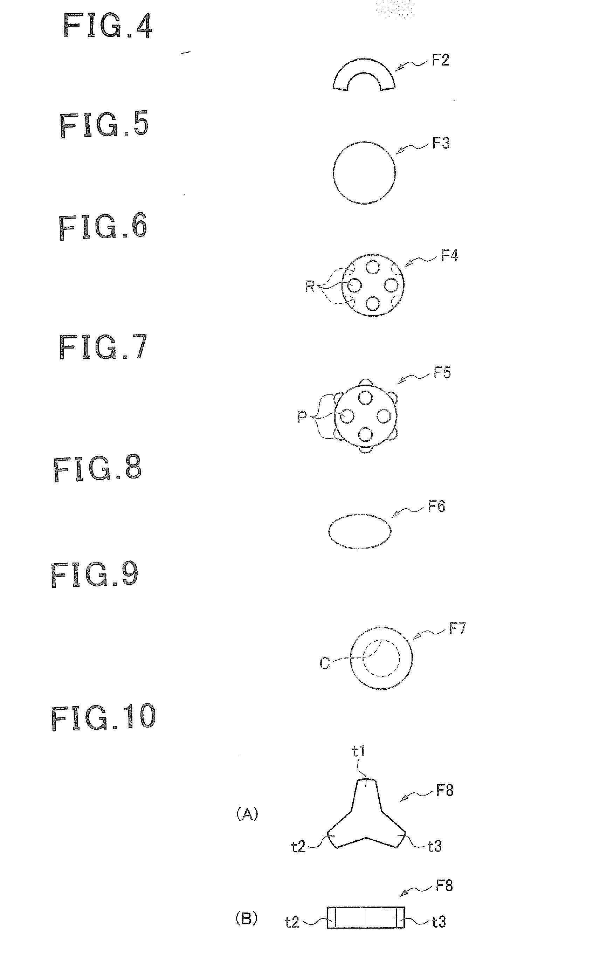

As shown in Fig. 4, in the molding step, a body waste treating material F2 with a short curved columnar shape can be molded. This short curved columnar body waste treating material F2 is entwined with each other in the container of the toilet so that it does not fly out of the container during a use by a pet, and the body waste does not reach a bottom of the container through the body waste treating material F2. Accordingly, absorption of the body waste is excellent.

As shown in Fig. 5, in the molding step, a body waste treating material F3 with a spherical shape can be formed. Even if the pet steps on this spherical body waste treating material F3 in the container of the toilet for a pet, the pet is not reluctant to relieve nature so that it is easy to have the pet learn the way to use the toilet.

As shown in Fig. 6, in the molding step, a body waste treating material F4 with a spherical surface on which recesses R are formed can be formed. In this body waste treating material F4 with the surface on which the recesses R are formed, the recesses R are easy to receive the body waste, and the body waste treating material F4 includes a high absorbing property according to an enlarged surface area.

As shown in Fig. 7, in the molding step, a body waste treating material F5 with a spherical surface on which protrusions P are formed is formed. A surface area of this body waste treating material F5 with the surface on which the protrusions P are formed is enlarged by the protrusions P so that the body waste can easily set and the body waste treating material F5 can be piled up to reduce an amount of use thereof.

As shown in Fig. 8, in the molding step, a body waste treating material F6 with a spindle shape can be formed. The body waste treating material F6 with the spindle shape may be closely arranged with the body waste treating material F6 adjacent to each other and put into the container of the toilet. Further, the body waste does not reach the bottom of the container through the body waste treating material F6. The body waste treating material F6 can absorb the body waste well.

As shown in Fig. 9, in the molding step, a spherical body waste treating material F7 with a hollow C in an inside thereof is formed. Since this body waste treating material F7 with the hollow C in the inside thereof is of light weight according to the hollow C, it is easily conveyed and can absorb the body waste well.

As shown in Fig. 10, in the molding step, a triangular star shaped body waste treating material F8 on which three legs t1-t3 protruding in three directions in a plan view are formed can be formed. A surface area of the triangular star shaped body waste treating material F8 with the three legs t1-t3 can be enlarged by the legs t1-t3 to improve an absorbing property, and the legs t1-t3 entwine with each other upon being fed into the container to include space therebetween. Accordingly, the body waste treating material F8 can be of light weight with respect to a volume thereof, and easily conveyed.

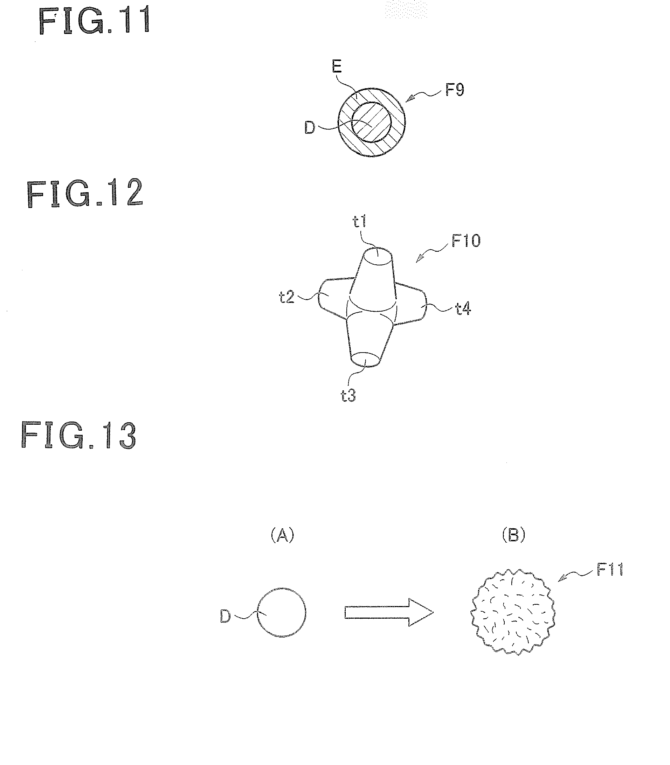

As shown in Fig. 11, in the molding step, a dual-structured body waste treating material F9 with a central side having the non-defective fibrous material D and an outer peripheral side having the defective fibrous material E can be formed. The body waste treating material F9 with the dual structure of the non-defective fibrous material D and the defective fibrous material E can efficiently use resources without wastes of the material.

As shown in Fig. 12, in the molding step, a wave dissipating block shaped body waste treating material F10 on which legs t1-t4 protruding in four directions are formed can be formed. A surface area of the body waste treating material F10 with the four legs t1-t4 can be enlarged by the legs t1-t4 to improve an absorbing property, and the legs t1-t4 entwine with each other upon being fed into the container to include space therebetween. Accordingly, the body waste treating material F10 can be of light weight with respect to a volume thereof, and easily conveyed.

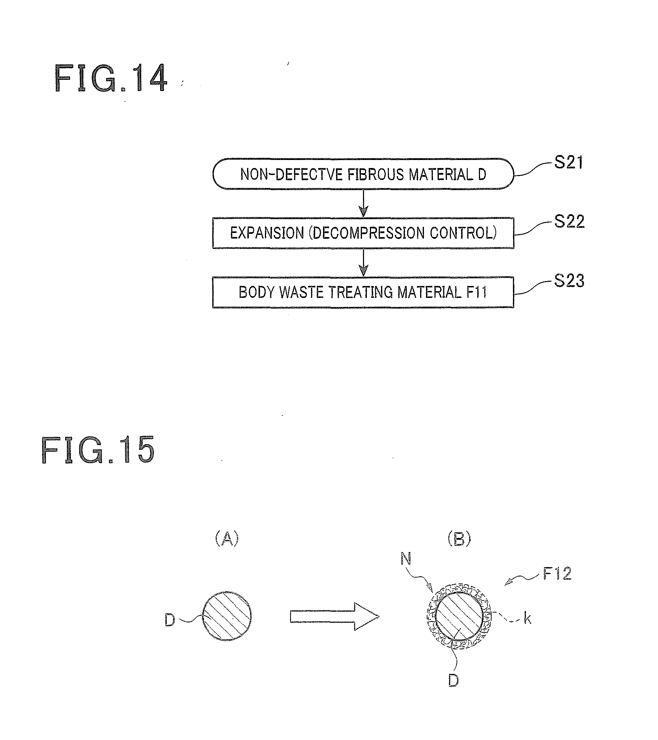

As shown in Figs. 13 and 14, in the molding step, a body waste treating material F11 with a high internal porosity can be formed.

As for this body waste treating material F11, in the molding step, for example, the non-defective fibrous material D is preformed by a mold (step S21), and this preformed non-defective fibrous material D is expanded (decompression controlled) in a decompression container (step S22).

This decompression control includes a vacuum state and is performed between the vacuum state and an atmospheric pressure. Further, the decompression control may be performed rapidly or moderately.

In the decompression control of the non-defective fibrous material D, a pressure in the decompression container is controlled so that the non-defective fibrous material D (as shown in Fig. 13(A)) preformed to have a small diameter first is expanded to be the body waste treating material F11 (as shown in Fig. 13(B)) as a spherical fibrous material with a certain diameter.

As the preformed non-defective fibrous material D is expanded to be the body waste treating material F11 (as shown in Fig. 13(B)) as a spherical fibrous material with a certain diameter as described above, many pieces of air are present in the inside of the body waste treating material F11 to have a high internal porosity.

In this case, it is possible to heat the non-defective fibrous material D by heating means or humidify the non-defective fibrous material D by humidifying means to complement water according to the needs so that the non-defective fibrous material D (as shown in Fig. 13(A)) with fibers having small diameters is easily expanded in a state where the fibers are tangled with each other.

Then, the non-defective fibrous material D is taken out of the decompression container to form the body waste treating material F11 dried without moisture, which is of light weight, and has a high water absorptive property (step S23).

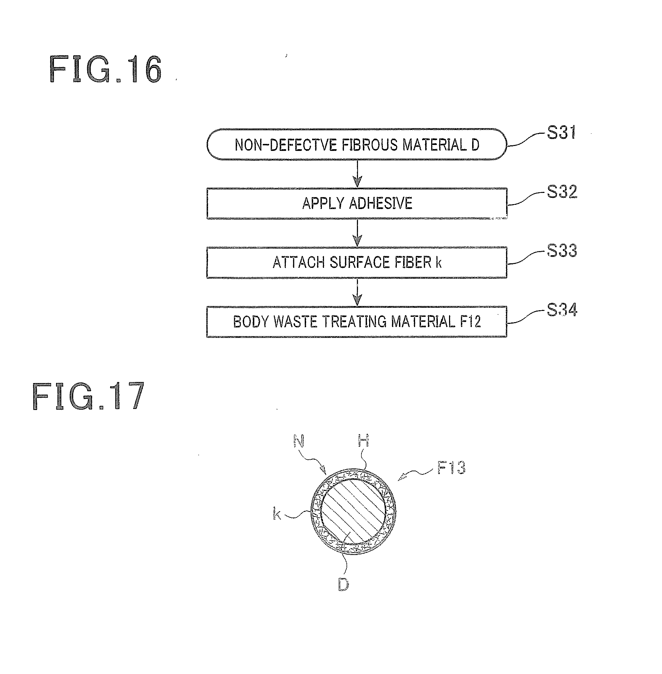

As shown in Figs. 15 and 16, in the molding step, a body waste treating material F12 with a flexible outer surface and a high water absorptive property can be formed.

As for this body waste treating material F12, in the molding step, the non-defective fibrous material D is preformed by a mold (step S31), an adhesive is applied to a surface of this preformed non-defective fibrous material D (step S32), and then, a surface fiber k is attached to the surface of the non-defective fibrous material D to form a flexible layer N (step S33).

The surface fiber k forming the flexible layer N is the non-defective fibrous material D and/or defective fibrous material E, for example as fibers in a detangled state.

Regarding an operation for attaching the surface fiber k onto the non-defective fibrous material D, for example, detangled surface fiber k is laid on a plate, and the preformed non-defective fibrous material D is rolled over the plate to attach the detangled surface fiber k onto the surface thereof.

Thereby, on the surface of the non-defective fibrous material D, the flexible layer N with a high water absorptive property is formed so that the body waste treating material F12 with a flexible outer surface and a high water absorptive property can be formed (step S34).

Further, the number of times of attaching the surface fibrous material k onto this non-defective fibrous material D may not be limited to once but several to form a multilayered structure so that a thickness of the flexible layer N of the non-defective fibrous material D can be enlarged.

Further, the attachment of the surface fiber k may be applied to the above described respective body waste treating materials F-F11.

As shown in Fig. 17, in the molding step, a body waste treating material F13 having a high water absorptive property, while maintaining a profile thereof can be formed. As shown in Figs. 15 and 16, in this body waste treating material F13, the flexible layer N formed by the surface fiber k itself is maintained in a flexible state, while merely a surface of the flexible layer N is hardened by a hardener, for example to form a hardened surface H. The body waste treating material F13 with the flexible layer N having a surface on which the hardened surface H is formed maintains its profile by the hardened surface H on the surface, while a water absorptive property can be improved by the flexible layer N with flexible contents and the body waste treating material F13 may be of light weight with respect to a volume thereof so that it can be easily conveyed.

As a result, the body waste treating material F according to the present embodiment is manufactured by molding the non-defective fibrous material D suitable for forming paper that is a fibrous material obtained by defiberizing, dehydrating, and bleaching used paper A as a pulpable raw material to a certain shape.

Since the body waste treating material F according to the present embodiment is manufactured by using the non-defective fibrous material D suitable for forming paper, it can be manufactured easily at a low cost without separate materials for complementing a water absorptive property and a water retention property and a wasting step for mincing corrugated material paper as a raw material as in a conventional step. Further, since the used paper A is used as the pulpable raw material, resources can be efficiently used.

Moreover, in the body waste treating material F, the internal porosity can be improved and the body waste treating material F has a high resolvability so that it can be flown into drainage to be easily discarded. Accordingly, the body waste treating material F is environment-friendly. Furthermore, it includes a high water absorptive property and can be of light weight.

Also, this body waste treating material may be manufactured by a manufacturing apparatus 1 with a simple structure.

The present invention is not limited to the above described embodiment but can be modified for a variety of applications.

For example, in the above described embodiment, the used paper A is illustrated as a pulpable raw material, but materials such as wood as virgin pulp (e.g., a needle-leaved tree and a broad-leaved tree) or non-wood pulp (such as linter and kenaf), and synthetic fiber (e.g., chemosynthetic fiber) may be used solely, or a plurality of the materials may be combined to be used. These materials may be pulped by a mechanical system using a mechanical device, or a chemical system using agents.

In the above described embodiment, the fibrous material C is classified into the non-defective fibrous material D and the defective fibrous material E by a filter of the classifying machine 6, but the defective fibrous material E can be classified according to a pressurized flotation method using pressurized air, a precipitation method using aggregating agent, and a ore floatation method using air bubbles, for example. In the present embodiment, a filter with a slit having a width (size) of 0.15 mm, for example is used to classify the fibrous material C into the non-defective fibrous material D with a fiber diameter greater than 0.15 mm, which remains on the filter and the defective fibrous material E with a fiber diameter smaller than 0.15 mm, which passes through the filter.

This numeral value tends to be adopted relatively frequently.

Accordingly, the numeral value of the fiber diameter in the present embodiment is merely an example and does not limit a scope of the numeral values.

In the above described embodiment, the body waste treating material F is manufactured by the defective fibrous material E generated by processing the used paper A, but the body waste treating material F may be manufactured by using a fibrous material (sludge) obtained by aggregating and settling paper industry drainage water with agent (aggregating agent) from which heavy metals are removed.

Also, in manufacturing the body waste treating material F, as shown by a dashed line in Figs. 1 and 2, prior to the molding step (step S10), a mixing step (step S9-1) of complementarily mixing the defective fibrous material E unsuitable for forming paper with the non-defective fibrous material D suitable for forming paper by a mixing machine 8 may be performed.

By complementarily mixing the defective fibrous material E with the non-defective fibrous material D, an amount of use of the non-defective fibrous material D may be reduced so as to reduce a cost as well.

Further, in a case where a greater amount of the defective fibrous material E is mixed with the non-defective fibrous material D, since the fibers of the defective fibrous material E are thin and short, they may be further disintegrated into water to improve resolvability. Moreover, as a raw material to be complementarily mixed with the non-defective fibrous material D, wood (e.g., a needle-leaved tree and a broad-leaved tree) or non-wood system (such as linter and kenaf), and synthetic fiber system (e.g., chemosynthetic fiber) as descried above may be pulped and one, two, or more types of them may be mixed to be used.

Furthermore, to control emission of smell after use, an air refresher may be added to the non-defective fibrous material D, and to allow the non-defective fibrous material D to be easily hardened upon absorbing water, an adhesive may be added thereto. To notify a user of absorbing water, dye may be added as well.

Also, in manufacturing the body waste treating material F, as shown by a dashed line in Figs. 1 and 2, after the molding step (step S10), a coating step (step S12) of coating the body waste treating material F with the non-defective fibrous material D including agents such as an adhesive by a coating machine 9 may be performed.

Accordingly, as shown in Fig. 1, upon manufacturing the body waste treating material F, in the coating step (step S12), a coated body waste treating material Fc may be obtained (step S13) by coating a surface of the body waste treating material F molded from the non-defective fibrous material D with the non-defective fibrous material D including the agents such as the adhesive.

In the body waste treating material Fc with the surface coated as described above, the water absorptive property may be further improved by the agents such as the adhesive.

Also, to the non-defective fibrous material D including the agents such as the adhesive used in this coating step, the air refresher may be added to control the emission of the smell after use, or the dye may be added to notify the user of absorbing water.

Further, in the method for manufacturing the body waste treating material F, to increase a degree of whiteness, calcium carbonate may be mixed with the fibrous material.

Moreover, a micro bubble generator for generating micro bubbles (fine air bubbles) may be added to the manufacturing apparatus 1 and a step of allowing the fibrous material C to contain the micro bubbles generated by the micro bubble generator may be added to the manufacturing method so as to increase internal porosity of the body waste treating material F.

Accordingly, the manufactured body waste treating material F may be of light weight and easily conveyed with an improved water absorptive property to be easily coagulated to be a mass and have a high resolvability to be flown into drainage to be easily discarded and be environment-friendly. Further, an amount of use of the non-defective fibrous *material D* may be saved so that the body waste treating material F can be manufactured at a low cost.

### Industrial Applicability

The body waste treating material manufactured according to the present invention may not be limited to a use of a toilet for a pet but used for a portable toilet or simple toilet used by a person.

### Reference Signs List

- 1:: Manufacturing Apparatus
- 2:: Disintegrator
- 3:: Deinking Machine
- 4:: Dehydrator
- 5:: Bleaching Machine
- 6:: Classifying Machine
- 7:: Molding Machine
- A:: Used Paper
- B:: Dissolved Material
- C:: Fibrous Material (Pulp)
- D:: Non-Defective Fibrous Material (Wet or Pulp)
- E:: Defective Fibrous Material (Sludge)
- F:: Body Waste Treating Material

## Claims

1. A body waste treating material obtained by molding a non-defective fibrous material suitable for forming paper, which is a fibrous material obtained by defiberizing and dehydrating pulpable raw material to a certain shape.

2. The body waste treating material according to claim 1, wherein the non-defective fibrous material suitable for forming paper includes thick and/or long fibers.

3. A method for manufacturing a body waste treating material, comprising the steps of:
defiberizing used paper as a pulpable raw material to generate a dissolved material;
deinking the dissolved material generated in the defiberizing step;
dehydrating the dissolved material deinked in the deinking step to generate a fibrous material;
classifying the fibrous material generated in the dehydrating step into a non-defective fibrous material suitable for forming paper and a defective fibrous material unsuitable for forming paper; and
molding the non-defective fibrous material suitable for forming paper classified in the classifying step to form the body waste treating material with a certain shape.

4. An apparatus for manufacturing a body waste treating material, comprising:
a disintegrator for defiberizing used paper as a pulpable raw material to generate a dissolved material;
a deinking machine for deinking the dissolved material generated by the disintegrator;
a dehydrator for dehydrating the dissolved material deinked by the deinking machine to generate a fibrous material;
a classifying machine for classifying the fibrous material generated by the dehydrator into a non-defective fibrous material suitable for forming paper and a defective fibrous material unsuitable for forming paper; and
a molding machine for molding the non-defective fibrous material suitable for forming paper classified by the classifying machine to form the body waste treating material with a certain shape.
